# EUROPEAN PATENT APPLICATION

(11) **EP 2 727 707 A1**
(43) Date of publication of application: **07.05.2014**
(21) Application number: 12191262.0
(22) Date of filing: 05.11.2012
(51) Int. Cl.: B29C 59/14, C08J 9/38

(54) **Process for the reticulation of a polymeric foam by thermal plasma, apparatus therefor and foam thus produced**

(71) Applicant: Recticel, 1140 Brussels (BE)
(72) Inventor: Scheers, Thomas, 1140 Brussel (BE); Van Puyenbroeck, Nico, 1140 Brussel (BE)
(74) Representative: BiiP cvba

(57) **Abstract**

The present invention concerns a process for the reticulation of a polymeric foam material comprising the step of exposing a surface of said foam to be treated to a thermal plasma jet for selectively removing cells membranes

## Description

### Technical Field

The present invention relates to a process for reticulating a polymeric foam sheet material using a thermal plasma jet. The process has the advantages that it can be run continuously and in a controllable and tunable way so that the struts defining the foam skeleton are left intact while the cell membranes are selectively removed on a desired area and throughout a desired thickness of a foam sheet.

### Background for the invention

In the production of polymeric foam materials such as a polyurethane foam, whereby a physical or chemical blowing agent is added to the reactive mixture, a generally closed-cell foam structure is obtained. The cellular foam structure typically includes a three-dimensional network of interconnected skeletal ribs which define a multiplicity of individual cells. The cell membranes which are inherently formed during the foam-forming reaction stretch between the skeletal ribs of many such cells, making the foam closed-cell. Such membranes or cell "windows" impair the fluid permeability of the foam and provide light-reflecting surfaces which adversely affect the suitability of the foam for many end uses, such as filter or sponge applications. Accordingly, for such and other applications, it is desirable that the cell membranes are selectively eliminated from the foam structure by a so called reticulation process.

Various reticulation processes have been proposed in the art to obtain an open-cell foam structure from a closed-cell foam structure. The problem is often to selectively destroy the cell membranes without impairing the structural strength of the foam, i.e. leaving the cell struts intact.

Closed-cell foam materials may be reticulated by treating the foam with hydrolyzing agents such as aqueous sodium hydroxide and other additives. In this process, the foam material is chemically degraded and it is difficult to control that only the cell membranes are degraded and that the struts remain unaffected, so that the structural strength of thus reticulated foams is often insufficient.

Closed-cell foams may be reticulated by thermally degrading the cell membranes with a flame. US5567740A and US3175025 disclose a reticulation process comprising exposing a closed-cell foam material to an explosion in an autoclave filled with a mixture of an oxidizing gas and an oxidizable gas, such as a mixture of oxygen and hydrogen, also known as oxyhydrogen gas. This explosion of the detonating gas mixture is triggered by a spark plug. The explosion breaks the cell membranes. This widely used process has the disadvantages that an expensive autoclave is required, the process is limited to batch treatment of foam blocks or foam sheet elements and cannot be run continuously, and of course, the risk of uncontrolled explosion exists.

In GB1327399 a process is disclosed wherein a foamed material, such as polyurethane, having partly or wholly closed cells is reticulated by discharging a high voltage high energy electrical discharge between a pair of electrodes arranged close to the material to be treated, thus producing a high speed high energy shock wave passing through the material to be treated. Here again, like in the autoclave explosion method discussed above, the destruction of the cell membranes is obtained by a shock wave.

US20090061200A1 discloses a method of hydrophobizing and also reticulating polyimide foams by exposing them to a cold plasma formed by a reticulation gas comprising oxygen and at least one organosulfur, organosilicon, or fluorine-containing compound. This process Is limited to polyimide foams, and is intended to render the foam material hydrophobic.

In spite of the numerous processes known in the art for reticulating a polymeric foam material, none is completely satisfactory because there is always an uncontrollable risk that the cell struts are affected as well. The present invention proposes a new reticulating process capable of maintaining high structural mechanical properties of the thus obtained open-cell foam. This and other advantages of the present invention are described in continuation.

### Summary of the invention

The present invention is defined in the appended independent claims. Preferred embodiments are defined in the dependent claims. In particular, the present invention concerns a process for the reticulation of a polymeric foam material comprising the step of exposing a surface of said foam to be treated to a thermal plasma jet for selectively removing the cells membranes. The polymeric foam material is preferably a polyurethane-based foam, a polyisocyanate-based foam, a polyisocyanurate-based foam, or a polyurea - based foam. In the present context, the term "reticulation" means that most cell membranes are removed from the cells which belong to a treated surface area down to a given depth below this surface. If most cell membranes of all cells of a foam structure are removed (i.e., over the whole area and thickness thereof), this is referred to as "complete reticulation".

In a preferred embodiment the polymeric foam is in the form of sheet material fed, preferably continuously, to a plasma reticulation chamber comprising at least one or a plurality of plasma torches facing one main surface of said sheet, preferably the plurality of torches are arranged in at least one row spanning at least a portion of the width of said main surface of said sheet. In yet a preferred embodiment at least two plasma torches or two sets of a plurality of plasma torches, each set being preferably arranged in at least one row, are provided to face the two main surfaces of said polymeric foam sheet. The at least one plasma torch or plurality of plasma torches must be located such that the area of the foam sheet material which is to be treated should be covered by them. If the whole of a main surface of the foam sheet material is to be treated, then a first set of a plurality of plasma torches covering the whole breadth of the foam sheet material shall be provided on said main surface. Of course, if both surfaces are to be treated, e.g., in case complete reticulation of the foam sheet material is desired, then a second set of a plurality of plasma torches, similar to the first one should be provided to cover the second main surface of the foam sheet material. The feeding speed of the polymeric sheet material into the plasma reticulation chamber can be of the order of between 2 and 100 m /min, preferably between 4 and 60 m / min, more preferably between 6 and 30 m /min.

In an alternative embodiment, the surface to be treated is exposed to a plasma jet by means of at least one plasma torch mounted on at least one robot scanning the plasma torch over an area of the surface to be treated, preferably at least two robots scanning a plasma torch over two areas of the foam to be reticulated. This embodiment is particularly suitable in case only a limited area of the foam material is to be exposed to the plasma jet.

The present process allows the control of the depth of reticulation, measured from the surface of a foam which is exposed to a plasma jet. The depth of reticulation can vary from superficial reticulation, wherein the cell membranes of only the cells located at the surface or up to a few millimetre below the surface are removed, to a complete reticulation, wherein the membranes of substantially all the cells through the thickness of the foam are removed within the area treated.

The plasma jet is conveniently produced by one or more plasma torches generating plasma by direct current (DC), alternating current (AC), or radio frequency (RF). The plasma is preferably generated by DC. A carrier fluid is used to carry the plasma jet. Said carrier fluid is preferably selected among oxygen, nitrogen, argon, helium, air, hydrogen, or mixtures thereof. The voltage difference between anode and cathode used in the plasma torches according to the present invention may be comprised between 10 and 50 kV, preferably between 15 and 30 kV, more preferably between 20 and 25 kV.

The choice of a convenient plasma jet speed depends on many factors, in particular the desired depth of reticulation, whether the foam material is static (batch process) or moving (continuous process) and the like. The one or more plasma torches may be located at a distance from the surface to be treated comprised between 0.5 and 50 mm, preferably, between 0.7 and 20 mm, more preferably between 0.9 and 12 mm.

The present invention also concerns a polymeric foam sheet material having an area of at least one main surface thereof which is reticulated over a given depth measured from said at least one main surface, obtained by a process as discussed supra. For example, only one main surface of the polymeric sheet material may have been reticulated over part or the whole of its area to a depth ranging from 1% to 99% of the thickness of the sheet material. Alternatively, both main surfaces of the polymeric foam sheet material may have been reticulated over part or the whole of their respective areas, yielding a polymeric foam sheet material having an unreticulated core of thickness comprised between 0 and 98% of the thickness of the polymeric sheet material. It is clear that an unreticulated core of 0% of the sheet thickness corresponds to a polymeric foam sheet material reticulated through the whole thickness thereof. Polyurethane-based foams, polyisocyanate-based foams, polyisocyanurate-based foams, or polyurea-based foams are particularly suitable for the present invention.

The present invention also concerns an apparatus for reticulating a polymeric foam sheet material comprising:
(a) A feeding unit (21 f) for delivering a polymeric foam sheet material to,
(b) Guiding means for guiding said polymeric sheet material (1) into
(c) A reticulating chamber (20) and out thereof to
(d) A collecting unit (21 c) for collecting the reticulated sheet foam material,
Characterized in that, the reticulation chamber comprises:
- at least one or a plurality of plasma torches (10a, 10c) facing one main surface of said sheet, preferably said plurality of torches are arranged in one or several rows facing one main surface of said sheet and spanning at least a portion of the sheet width, more preferably
- at least two plasma torches or two sets of a plurality of plasma torches (10a-d) facing the two main surfaces of said polymeric foam sheet.

### Brief description of the Figures

For a fuller understanding of the nature of the present invention, reference is made to the following detailed description taken in conjunction with the accompanying drawings in which:
Figure 1: shows pictures of a polymeric foam material (a) with cells sealed by cell membranes and (b) after thermal plasma reticulation, with removed cell membranes.
Figure 2: shows a thermal plasma torch.
Figure 3: shows an apparatus for the continuous reticulation of a polymeric foam sheet material according to the present invention, comprising a thermal plasma chamber.
Figure 4: shows an apparatus for the reticulation of a polymeric foam material according to the present invention comprising a robot holding a thermal plasma torch.
Figure 5: shows different reticulation patterns of a polymeric foam sheet material according to the present invention.

### Detailed description of the invention

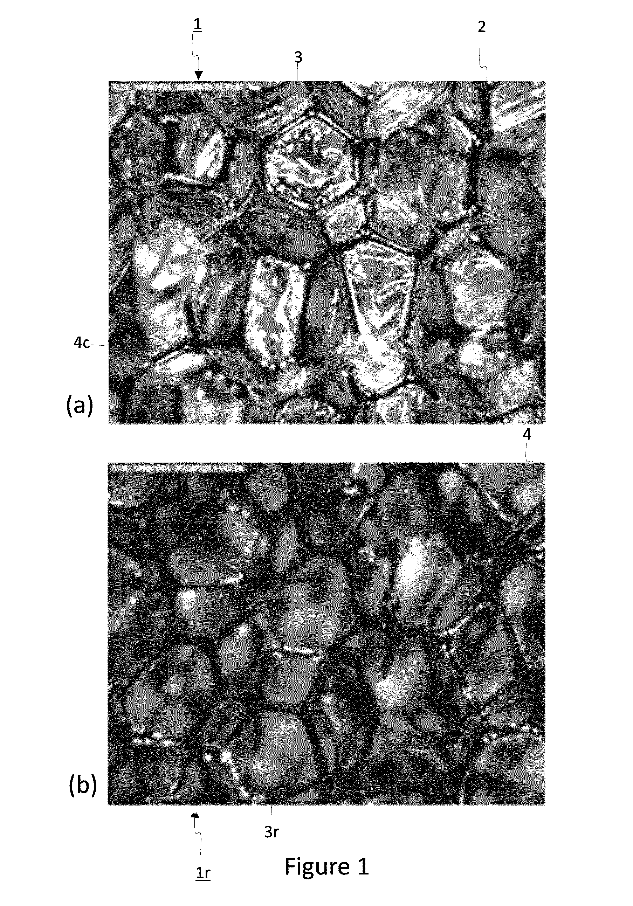

As shown in Figure 1(a) the cells (4) of a polymeric foam material (1) are often sealed by thin cell membranes (3) as a result of the polymerization and blowing process during the production thereof. In some applications, it is desirable to open at least part of the closed cells (4c) by removal of at least part of the thin cell membranes (3) as illustrated in Figure 1(b). This process is called reticulation. The present invention concerns a reticulation process for polymeric foams, in particular, but without restriction, for polyurethane-based foams, polyisocyanate-based foams, polyisocyanurate-based foams, or polyurea-based foams, comprising the step of exposing a surface of said foam to be treated to a thermal plasma jet for selectively removing the cell membranes.

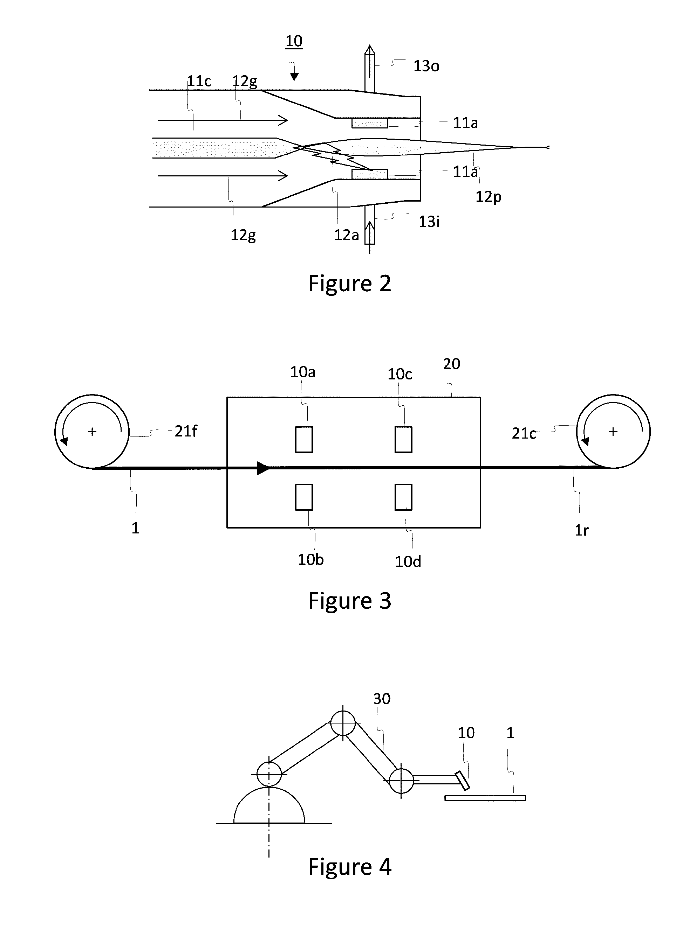

Thermal plasmas have electrons and the heavy particles (such as ions) at the same temperature, such that they are in thermal equilibrium with each other. By contrast, the ions and neutrals in non-thermal plasmas are at a much lower temperature (about room temperature) than the electrons. Thermal plasmas can be generated in plasma torches by direct current (DC), alternating current (AC), radio-frequency (RF) and other discharges. DC torches are preferred and an example thereof is illustrated in Figure 2. Plasma torches (10) of different types, including DC, are well known and a whole selection thereof is commercially available. Only the basic principles of a plasma torch are revised herein for a better understanding of the invention. An electric arc (12a) is formed between electrodes (anode (12a) and cathode (12c)) and a carrier fluid (12g) flows across said arc at a given velocity and is ionized to form a plasma jet. The carrier fluid can conveniently be any of oxygen, nitrogen, argon, helium, air, hydrogen, etc. The plasma torch needs be cooled with a cooling fluid flowing within the nozzle region of the torch from an inlet (13i) to an outlet (13o). In continuation, unless otherwise indicated, the term "plasma" is used to refer to a "thermal plasma" only.

In a DC-torch, the plasma jet is conveniently generated with a voltage difference between anode and cathode comprised between 10 and 50 kV, preferably between 15 and 30 kV, more preferably between 20 and 25 kV. The optimal distance of the nozzle of the plasma torch(es) to the surface(s) to be treated depends *inter alia* on the power of the plasma jet, the properties of the foam to be treated (such as the density, the cell size, the thickness), and the depth through the thickness of the foam it is desired to reticulate. For example, the nozzle of the torch(es) may be located at a distance from the surface to be treated comprised between 0.5 and 50 mm, preferably, between 0.7 and 20 mm, more preferably between 0.9 and 12 mm. The plasma torches are preferably mounted in the plasma reticulation chamber (20) such that their position may be varied to permit the treatment of polymeric foam sheets of different thicknesses.

As illustrated in Figure 3, the process of the present invention can be carried out continuously by feeding a polymeric sheet material (1) from a feeding unit (21f) to a plasma reticulation chamber (20) where the polymeric foam material is to be reticulated. The reticulated foam material (1 r) is then collected by a collecting unit (21 c). If the polymeric sheet material is in the form of a long strip of material, the feeding and collecting units (21 f, 21 c) can be spools as illustrated in Figure 3. If individual foam sheets have to be reticulated, these can be conveyed to the reticulation chamber (20) by a conveying unit. The plasma reticulation chamber (20) comprises at least one or a plurality of plasma torches facing one main surface of said sheet material (1). It is preferred that a plurality of plasma torches facing one main surface of said sheet be arranged in at least a row (10a, 10c). In yet a preferred embodiment, at least two plasma torches or at least two sets (10a, 10b) of a plurality of plasma torches are arranged to face the two main surfaces of said polymeric foam sheet. The at least one or plurality of torches must span over the portion of a surface that it is desired to reticulate. If a plurality of plasma torches (10a-d) are used, they can be mounted on a rack, which relative position with respect the surface of the polymeric sheet material can be varied. The feeding speed of the foam sheet material (1) to the reticulation chamber (20) may be comprised between 2 and 100 m/min, preferably between 4 and 60 m/min, more preferably between 6 and 30 m/min.

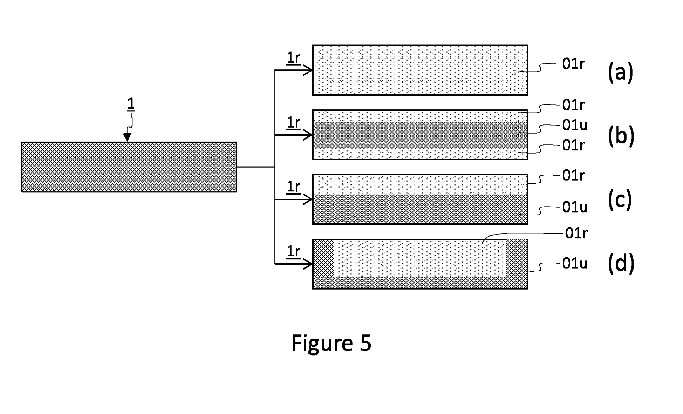

The depth of reticulation measured from the surface of the foam sheet material facing a plasma torch depends on a number of process parameters including the feeding speed of the sheet material, the distance of the torches nozzles to the surface, and the energy of the plasma jet. By modulating these parameters it is possible to control the desired depth of reticulation across the thickness of the foam sheet material, in function of the properties of the foam material (such as density, cell size). As illustrated in Figure 5(a), the foam can be reticulated throughout its whole thickness. This is advantageously achieved by using at least two (rows of) plasma torches (10a, 10b) facing the two main faces of the sheet material, said plasma torches being each controlled to reticulate at least 50% of the foam sheet thickness. Foams at least a portion of their breadth being reticulated throughout the whole thickness of the sheet can be useful in applications such as foam sheets for water draining applications, for example in sport floor underlays.

As illustrated in Figure 5(b), by controlling the plasma torches such that less than 50% of the thickness of the sheet is reticulated by each plasma jet, it is possible to keep a core (01u) with closed cells (i.e. unreticulated), separating two reticulated portions (01r) extending to the corresponding main surfaces. If only a first main face of the foam sheet material is exposed to a plasma jet, it is possible - as illustrated in Figure 5(c) - to obtain a sheet material with a reticulated portion (01r) with a thickness starting from said first surface being reticulated, whilst the remaining portion (01 u) of the thickness including the second, opposite main surface, remains closed-celled. Finally, as illustrated in Figure 5(d), if the plasma torch(es) facing one side of the foam sheet does not span the whole breadth of the sheet material, it is possible to reticulate a central portion (01 r) only across the width of the sheet, while maintaining the edges (01 u) unreticulated. Any pattern of alternating and parallel adjacent stripes or areas of reticulated (01 r) and unreticulated (01 u) foam can be envisaged.

Alternatively to a continuous process as described above and illustrated in Figure 3, the apparatus illustrated in Figure 4 makes use of at least one robot (30) to scan the portion of a surface of a foam article to be reticulated with at least one plasma torch, or a plurality of plasma torches, e.g., arranged in a rack. If more than two separate areas must be treated (e.g., two main faces of a sheet material), it can be advantageous to use more than one robot. The apparatus illustrated in Figure 4 may be particularly advantageous for reticulating foam materials which are not in a sheet form or for reticulating only a specific or limited area of the foam surface. It is also possible to vary the reticulation depth from one area of a foam part to another by simply programming the robot to vary the distance separating the plasma torch nozzle from the surface of the foam.

If the carrying fluid of the thermal plasma jet contains specific compounds, it is also possible to functionalize the foam during the reticulation process. By functionalization is meant : modification of the surface properties. For instance, if the plasma jet comprises fluorine ions the foam can be modified such that it becomes more hydrophobic. The functionalizing ions may be introduced into the carrying fluid (12g) used for the reticulating plasma jet, or can be introduced into a second torch or plurality of torches, positioned downstream from the reticulating plasma torches. The reticulated foams can thus be functionalized to increase the surface hydrophobicity by addition of low surface tension molecules or to increase the surface hydrophilicity by the addition of polar molecules, or to increase the electrical conductivity by addition of anti-static additives, and the like.

### EXAMPLE

20 x 30 cm polyurethane foam slabs (MMS 28280 available from RECTICEL) of 10 mm thickness were reticulated by a conventional explosion method as described in US5567740 and by thermal plasma reticulation according to the present invention. The density of the foam before reticulation was 27 kg / m³ and the average cell size was 2800 µm equivalent diameter.

The explosion reticulation was run at an ignition pressure of 1050 mbar in an autoclave filled with an oxyhydrogen gas having a hydrogen/oxygen partial pressure ratio of 2 to 1. Reticulation of a sheet foam material was completed after 10 s. The properties of the thus reticulated foam material are listed in Table 1 as "CEX".

A plasma torch (10) was scanned by a robot (30) at a constant distance of 1 mm over the two main surfaces of the foam sheet (1). The plasma torch was set at a voltage difference between anode and cathode of 20 kV. The properties of the thus reticulated foam material are listed in Table 1 as "INV". Figure 1 shows pictures of the surface of such a foam slab (a) before and (b) after reticulation with a plasma torch set as defined supra. The elimination of the cell membranes is clearly visible in Figure 1(b). Table 1 lists some properties of the foam before reticulation (= REF), after explosion reticulation according to the prior art (= CEX) and after thermal plasma reticulation according to the present invention (= INV). It can be seen that the air permeability before reticulation was very low at a level of about 300 l / (dm².min), due to the closed-cell structure of the foam. It increases by over one order of magnitude to about 4500 l / (dm².min) by conventional explosion reticulation (= CEX), and even higher to 5160 l / (dm².min) by thermal plasma reticulation (= INV), i.e., 15% higher than CEX). Surprisingly, the higher permeability obtained by thermal plasma reticulation is also accompanied by higher mechanical properties, with 15% higher tensile strength (152 MPa vs 132 MPa) and 27% higher elongation at break (286% vs 225%) compared with CEX. These higher mechanical properties suggest that the thermal plasma reticulation process selectively removes the cell membranes without substantially affecting -or at least to a much lesser extent than explosion reticulation- the strength of the struts forming the skeleton of the cells.

**Table 1: properties of foams: REF: before reticulation, CEX: after explosion reticulation, and INV, after thermal plasma reticulation.**

| | | **REF** | **CEX** | **INV** |
|---|---|---|---|---|
| Hardness | | | | |
| | CLD 25% (kPa)⁽¹⁾ | 3,5 | 2,2 | 2,4 |
| | CLD 40% (kPa)⁽¹⁾ | 3,8 | 2,6 | 2,7 |
| | CLD 60% (kPa)⁽¹⁾ | 5,7 | 4,0 | 4,2 |
| Tensile strength (kPa)⁽²⁾ | | 98,0 | 132,0 | 152,0 |
| Elongation (%)⁽²⁾ | | 143,0 | 225,0 | 286,0 |
| Air permeability (l / (dm².min))⁽³⁾ | | 294,0 | 4470,0 | 5160,0 |

| | | | | |
|---|---|---|---|---|
| ⁽¹⁾ CLD = compression load deflection, ISO3386/1 CLD measures the stress required to compress a foam sheet material to 25, 40, and 60% of its original thickness at a given speed ⁽²⁾ ISO1798 ⁽³⁾ ISO9237 | | | | |

The thermal plasma reticulation process of the present invention presents several advantages over state of the art reticulation techniques, as it allows:
(a) continuous reticulation of foam materials (cf. Figure 3);
(b) faster and cheaper process;
(c) local reticulation of a specific area of a foam material (e.g., one surface only, a specific area within a surface, or leaving an unreticulated core portion (cf. Figure 5)):
(d) control and variation of the depth of reticulation like never before (cf. Figures 4&5);
(e) tunable reticulation enabling to obtain reticulated foams with even better mechanical properties

## Claims

1. Process for the reticulation of a polymeric foam material comprising the step of exposing a surface of said foam to be treated to a thermal plasma jet for selectively removing cells membranes.

2. Process according to claim 1, wherein the polymeric foam material is a polyurethane-based foam, a polyisocyanate based foam, a polyisocyanurate based foam, or a polyurea based foam.

3. Process according to claim 1 or 2, wherein the polymeric foam is in the form of sheet material fed, preferably continuously to a plasma reticulation chamber comprising at least one or a plurality of plasma torches facing one main surface of said sheet, preferably the plurality of torches are arranged in one or several rows facing one main surface of said sheet and spanning at least a portion of the sheet width, more preferably at least two plasma torches or two sets of a plurality of plasma torches facing the two main surfaces of said polymeric foam sheet.

4. Process according to claim 3, wherein the foam sheet material is fed continuously to the plasma reticulation chamber at a speed comprised between 2 and 100 m / min, preferably between 6 and 30 m / min.

5. Process according to claim 1 or 2, wherein a surface to be treated is exposed to a plasma jet by means of at least one plasma torch mounted on at least one robot scanning the plasma torch over an area of the surface to be treated, preferably at least two robots scanning a plasma torch over two areas of the foam to be reticulated.

6. Process according to any of the preceding claims, wherein depth of reticulation measured from the surface of a foam exposed to a plasma jet is controlled, ranging from superficial reticulation to complete reticulation through the whole thickness of the foam.

7. Process according to any of the preceding claims wherein the plasma jet is produced by one or more plasma torches generating plasma by direct current (DC), alternating current (AC), or radio frequency (RF), preferably the plasma is generated by DC.

8. Process according to any of the preceding claims, wherein the plasma jet is carried by a carrier fluid selected among oxygen, nitrogen, argon, helium, air, hydrogen, or mixtures thereof.

9. Process according to any of the preceding claims, wherein the speed of the plasma jet is comprised between 100 and 500 mm / s, preferably between 250 and 350 mm / s, and/or the plasma jet is generated with a voltage difference between anode and cathode comprised between 10 and 50 kV, preferably between 15 and 30 kV, more preferably between 20 and 25 kV.

10. Process according to any of the preceding claims, wherein the plasma jet is generated by a plasma torch located at a distance from the surface to be treated comprised between 0.5 and 50 mm, preferably, between 0.7 and 20 mm, more preferably between 0.9 and 12 mm.

11. Polymeric foam sheet material having an area of at least one main surface thereof which is reticulated over a given depth measured from said at least one main surface, obtained by a process according to any of the preceding claims.

12. Polymeric foam sheet material according to the preceding claim, wherein one main surface of the polymeric foam sheet material is reticulated over part or the whole of its area to a depth ranging from 1% to 99% of the thickness of the sheet material, or wherein both main surfaces of the polymeric foam sheet material are reticulated over part or the whole of their respective areas, yielding a polymeric foam sheet material having an unreticulated core of thickness comprised between 0 and 98% of the thickness of the polymeric sheet material, an unreticulatd core of 0% of the sheet thickness corresponding to a polymeric foam sheet material reticulated through the whole thickness thereof.

13. Polymeric foam sheet material according to claim 11, wherein the polymeric foam material is a polyurethane-based foam, a polyisocyanate based foam, a polyisocyanurate based foam, or a polyurea based foam.

14. Apparatus for reticulating a polymeric foam sheet material comprising:
(a) A feeding unit (21 f) for delivering polymeric foam sheet material to,
(b) Guiding means for guiding said polymeric sheet material (1) into
(c) A reticulating chamber (20) and out thereof to
(d) A collecting unit (21c) for collecting the reticulated sheet foam material,
**Characterized in that,** the reticulation chamber comprises:
• at least one or a plurality of plasma torches (10a, 10c) facing one main surface of said sheet, preferably said plurality of torches are arranged in one or several rows facing one main surface of said sheet and spanning at least a portion of the sheet width, more preferably
• at least two plasma torches or two sets of a plurality of plasma torches (10a-d) facing the two main surfaces of said polymeric foam sheet.
